# EUROPÄISCHE PATENTSCHRIFT

(11) **EP 2 839 239 B1**
(45) Veröffentlichungstag und Bekanntmachung des Hinweises auf die Patenterteilung: **10.07.2019**
(21) Anmeldenummer: 13711873.3
(22) Anmeldetag: 20.03.2013
(51) Int. Cl.: G01B 11/26, G01B 11/14, G01B 21/26, G01B 11/275

(54) **VERFAHREN ZUR BESTIMMUNG DER ORIENTIERUNG MINDESTENS EINER FAHRSCHIENE EINES MESSPLATZES UND VORRICHTUNG ZUR DURCHFÜHRUNG DES VERFAHREN**
METHOD FOR DETERMINING THE ORIENTATION OF AT LEAST ONE RAIL OF A MEASURING STATION AND APPARATUS FOR CARRYING OUT THE METHOD
PROCÉDÉ DE DÉTERMINATION DE L'ORIENTATION D'AU MOINS UN RAIL DE ROULEMENT D'UN POSTE DE MESURE ET DISPOSITIF PERMETTANT LA MISE EN OEUVRE DUDIT PROCÉDÉ

(30) Priorität: 16.04.2012 DE 102012206212
(43) Veröffentlichungstag der Anmeldung: 25.02.2015
(73) Patentinhaber: Beissbarth GmbH, 80993 München (DE)
(72) Erfinder: BICHLMEIER, Ulrich, 84453 Muehldorf (DE)
(74) Vertreter: Schmitt-Nilson Schraud Waibel Wohlfrom Patentanwälte Partnerschaft mbB
(86) Internationale Anmeldenummer: PCT/EP2013/055802
(87) Internationale Veröffentlichungsnummer: WO 2013/156243

(56) Entgegenhaltungen:
- DE-C1- 19 702 072
- US-A- 5 724 128
- US-A1- 2005 030 525
- US-A1- 2006 126 966
- US-A1- 2008 273 194

## Beschreibung

Die Erfindung betrifft ein Verfahren zur Bestimmung der Orientierung mindestens einer Fahrschiene eines Messplatzes und eine Vorrichtung zur Durchführung des Verfahrens nach dem Oberbegriff der unabhängigen Ansprüche.

### Stand der Technik

Aus US 2006/0126966 sind ein Verfahren und eine Vorrichtung für ein Achsvermessungssystem bekannt, welches zur Bestimmung der Orientierung mindestens einer Oberfläche der Hebebühne genutzt werden kann. Hierbei wird ein Target auf der zu untersuchenden Oberfläche positioniert, das Target mit Hilfe einer Kamera aufgenommen und die Lage und Orientierung des Targets bestimmt.

### Offenbarung der Erfindung

Das erfindungsgemäße Verfahren und die erfindungsgemäße Vorrichtung mit den kennzeichnenden Merkmalen der unabhängigen Ansprüche haben demgegenüber den Vorteil, dass keine Targets auf den zu untersuchenden Fahrschienen platziert werden müssen. Durch das erfindungsgemäße Verfahren und die erfindungsgemäße Vorrichtung ist eine Bestimmung der Orientierung der Fahrschienen in Bezug auf das Erdschwerefeld ohne zusätzliche Hilfsmittel, wie z.B. Targets möglich.

US 2005/030525 A1 offenbart ein Verfahren zur Bestimmung der Achsgeometrie durch Aufnahme und Auswertung eines topographischen Bildes der Stirnseite eines auf einer Achse angebrachten Rades, wobei das Verfahren die folgenden Schritte umfasst: flächige Projizierung von Licht mit einer flächigen Codierung auf die Stirnseite des Rades; flächige Aufnahme des von der Stirnseite des Rades reflektierten Lichtes aus einer anderen Richtung als der Licht-Projektionsrichtung durch einen Bildwandler; Ermittlung von dreidimensionalen Oberflächenkoordinaten für das topographische Bild der Stirnseite des Rades aus den Lichtsignalen; und Auswertung des topographischen Bildes in Bezug auf ein Referenzsystem.

US 5 724 128 A eine Vorrichtung und ein Verfahren zum Bestimmen der Positionen und Ausrichtungen von Fahrzeugrädern mit auf den Rädern angebrachten optische Zielen und optischen Zielen, die in einer festen Beziehung in Bezug auf die Oberfläche, auf der die Räder angeordnet sind, angebracht sind. Videokameras werden eingesetzt, um Bilder der verschiedenen optischen Ziele zu erhalten. Ein Computer spricht auf die Bilder der Ziele an, um Radausrichtungsparameter des Fahrzeugs relativ zu der Oberfläche zu bestimmen, auf der die Fahrzeugräder rollen. Es werden auch Verfahren zum Kalibrieren einer solchen Vorrichtung und Verfahren, die eine solche Vorrichtung verwenden, um die Ebenheit der Oberfläche zu bestimmen, auf der die Räder rollen, beschrieben.

US 2006/126966 A1 beschreibt ein Verfahren und eine Vorrichtung zum Verwenden eines Maschinenfahrzeug-Radausrichtsystems zum Messen einer Orientierung von einer oder mehreren Fahrzeugstützflächen eines Fahrzeughebesystems und zum Messen und Kompensieren einer oder mehrerer Fahrzeugabmessungen relativ zu der Fahrzeugstützfläche des Fahrzeughebesystems.

DE 19 702 072 C1 offenbart eine Vorrichtung zum Erfassen der Lage und/oder des Typs von Gleisverzweigungen wie Weichen oder Kreuzungen. Die Vorrichtung umfasst eine Messeinheit, die über wenigstens einen Strahlungssender sowie einen wenigstens zwei Empfangselemente aufweisenden Strahlungsempfänger verfügt und bei der Sendestrahlung des oder jedes Strahlungssenders wenigstens einen Gleisbereich beaufschlagend ausrichtbar sowie mit dem Strahlungsempfänger aus dem oder jedem Gleisbereich rückgeworfene Sendestrahlung als Detektionsstrahlung ortsaufgelöst erfassbar ist. Die Vorrichtung umfasst auch eine Auswerteeinheit, die aus den ortsaufgelösten Daten der erfassten Detektionsstrahlung die Lage und/oder den Typ von Gleisverzweigungen bestimmt.

US 2008/273194 A1 offenbart ein Verfahren zum Bestimmen von Einstellungseigenschaften einer an einem Fahrzeug montierten Anordnung von Reifen und Felge. Das Verfahren umfasst: Projizieren einer Vielzahl von Lichtebenen auf eine Anordnung von Reifen und Felge, um eine Vielzahl von allgemein parallelen Beleuchtungslinien auf einem Reifen der Anordnung von Reifen und Felge zu bilden, umfassend das Bilden eines Zwischenraums zwischen einem Paar der Beleuchtungslinien, wobei der Zwischenraum einen nicht beleuchteten Abstand umfasst, der sich von dem nicht beleuchteten Abstand zwischen anderen Paaren der Beleuchtungslinien unterscheidet. Das Verfahren umfasst darüber hinaus Empfangen eines reflektierten Bilds von mindestens einigen der Beleuchtungslinien mit einer fotoelektrischen Vorrichtung, wobei die fotoelektrische Vorrichtung Bilder der von dem Reifen reflektierten Beleuchtungslinien, einschließlich dem den Zwischenraum bildenden Paar der Beleuchtungslinien, empfängt; Ermitteln der Identität und Lage derjenigen in dem Empfangsschritt abgebildeten Beleuchtungslinien basierend auf dem den Zwischenraum bildenden Paar der Beleuchtungslinien; und Bestimmen einer von räumlichen Koordinaten von den von der fotoelektrischen Vorrichtung abgebildeten Beleuchtungslinien definierten Ebene, wobei die Ebene die Orientierung der Anordnung von Reifen und Felge repräsentiert.

Dies ermöglicht eine einfache Durchführung des Verfahrens, da keine zusätzlichen Hilfsmittel auf den Fahrschienen befestigt oder platziert werden müssen.

Mit den Maßnahmen der Unteransprüche sind vorteilhafte Weiterbildungen und Verbesserungen der Erfindung möglich.

Vorteilhaft ist, strukturiertes Licht, welches durch mindestens eine Beleuchtungseinheit auf die Fahrschiene projiziert wird, nach der Reflektion an der Fahrschiene durch mindestens eine Kamera aufzunehmen, da sich im strukturierten Licht leicht markante Lichtpunkte identifizieren lassen, die zur Abstandmessung genutzt werden können. Durch den Einsatz von strukturiertem Licht kann sicher gewährleistet werden, dass drei Lichtpunkte zur Bestimmung der Orientierung der Fahrschiene zur Verfügung stehen.

Besonders vorteilhaft ist die Nutzung einer TOF-Kamera (Time-of-the-Flight-Kamera) durch welche sich die Lage der Fahrschiene im Bezug zum Messwertaufnehmer direkt und sehr genau bestimmen lässt. Des Weiteren ist die mindestens eine Beleuchtungseinheit in der mindestens einen TOF-Kamera integriert, so dass ein besonders kompakter Aufbau des Messwertaufnehmers möglich ist.

Die Nutzung von unstrukturiertem Licht zur Erkennung einer Eigentextur der Fahrschiene ist vorteilhaft, da Beleuchtungseinheiten zur Erzeugung des unstrukturierten Lichtes geringe Kosten verursachen.

Ein weiterer Vorteil wird durch die Bestimmung der Orientierung der Fahrschienen zueinander erzielt, indem durch mindestens einen Messwertaufnehmer eine linke Fahrschiene vermessen wird und durch mindestens einen weiteren Messwertaufnehmer eine rechte Fahrschiene vermessen wird, wobei die Messwertaufnehmer ein Referenzsystem aufweisen, durch welches Orientierung der Messwertaufnehmer zueinander und der linken Fahrschiene zur rechten Fahrschiene bestimmt wird.

Ein weiterer Vorteil wird durch mindestens ein Ausrichtungssensor im Messwertaufnehmer erreicht, der die Orientierung des Messwertaufnehmers und die Orientierung der Fahrschiene zum Erdschwerefeld bestimmt, da die genaue Orientierung der Fahrschienen für eine Berechnung von Spur und/oder Sturz der Fahrzeugräder benötigt wird.

Vorteilhaft ist die Positionierung der Messwertaufnehmer so im Bezug zu einem Fahrzeug , dass die mindestens eine Kamera gleichzeitig auf ein Fahrzeugrad und eine Fahrschiene blickt und die mindestens eine Beleuchtungseinheit gleichzeitig ein Fahrzeugrad und eine Fahrschiene beleuchtet, so dass gleichzeitige eine Achsvermessung und eine Vermessung der Orientierung der Fahrschienen durchgeführt werden kann. Dies führt zu einem beschleunigten Messablauf.

Vorteilhaft ist eine bewegliche Lagerung der mindestens eine Beleuchtungseinheit und/oder Kamera im Messwertaufnehmer, da dadurch die mindestens eine Beleuchtungseinheit und/oder Kamera vor der Beleuchtung der Fahrschienen und Aufnahme des reflektierten Lichts so gedreht werden können, dass sie in Richtung der Fahrschiene blicken, wodurch eine genauere Bestimmung der Orientierung und/oder Ebenheit der Fahrschienen möglich wird. Die Beleuchtungseinheiten und Kameras können dadurch gezielt Bereiche der Fahrschiene auf denen sich kein Fahrzeugrad befindet beleuchten und aufnehmen.

Durch die Untersuchung der mindestens einen Fahrschiene bezüglich ihrer Ebenheit können mögliche Fehler bei der Achsvermessung zur Bestimmung von Spur und/oder Sturz der Fahrzeugräder sicher ausgeschlossen werden. Wird bei der Vermessung festgestellt, dass die Fahrschienen uneben sind, so müssen Maßnahmen zur Korrektur der Messwerte getroffen werden oder die Fahrschienen müssen neu ausgerichtet werden.

Vorteilhaft ist die Vermessung der Orientierung und/oder Ebenheit während sich ein Fahrzeug auf den Fahrschienen befindet, da dadurch der Einfluss des Gewichtes des Fahrzeuges auf die Fahrschienen berücksichtigt werden kann. Des Weiteren kann die Vermessung der Orientierung und/oder Ebenheit gleichzeitig oder kurz vor oder kurz nach der Achsvermessung zur Bestimmung von Spur- und/oder Sturz der Fahrzeugräder durchgeführt werden, wodurch die Gesamtmesszeit stark reduziert werden kann.

### Ausführungsbeispiele

Ausführungsbeispiele der Erfindung sind in der Zeichnung dargestellt und in der nachfolgenden Beschreibung näher erläutert.

Es zeigen:
- Figur 1: eine schematische Darstellung eines Messplatzes einer Fahrwerksvermessungseinrichtung und
- Figur 2: eine Darstellung eines Messwertaufnehmers und einer Fahrschiene.

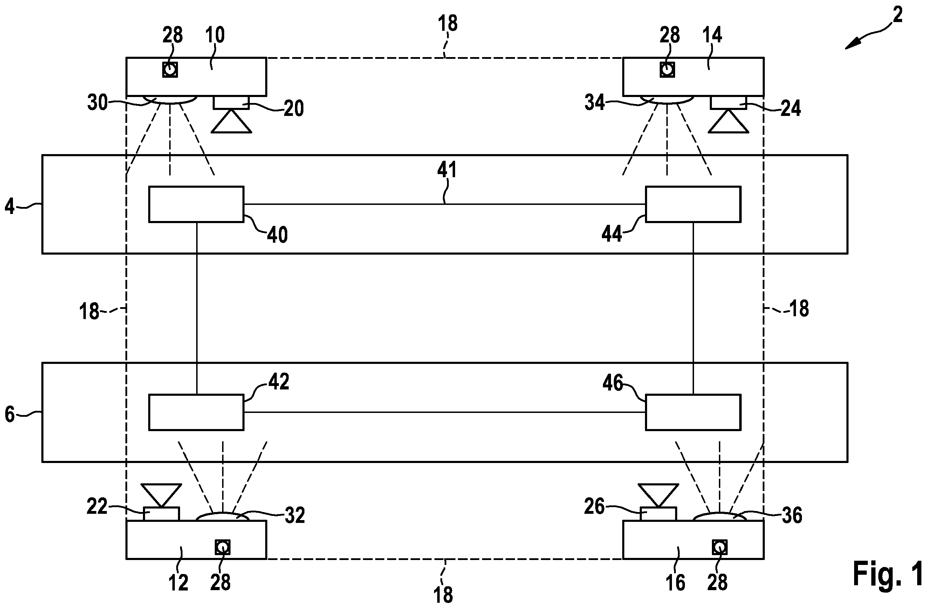

In Figur 1 ist eine Darstellung eines Messplatzes 2 gezeigt. Der Messplatz 2 weist zwei längliche Fahrschienen 4, 6 auf, die als Aufstandsflächen eines zu vermessenden Fahrzeuges 41 dienen.

Am Messplatz 2 sind vier Messwertaufnehmer 10, 12, 14, 16 angeordnet, wobei der vordere rechte Messwertaufnehmer 10 für ein vorderes rechtes Rad 40, der vordere linke Messwertaufnehmer 12 für ein vorderes linkes Rad, 42 der hintere rechte Messwertaufnehmer 14 für ein hinteres rechtes Rad 44 und der hintere linke Messwertaufnehmer 16 für ein hinteres linkes Rad 46 eingesetzt wird. Die Messwertaufnehmer 10, 12, 14, 16 verfügen jeweils über mindestens eine Kamera 20, 22, 24, 26 und jeweils mindestens eine Beleuchtungseinheit 30, 32, 34, 36.

Die Messwertaufnehmer 10, 12, 14, 16 sind so im Bezug zum zu vermessenden Fahrzeug 41 positioniert, dass die mindestens eine Kamera 20, 22, 24, 26 und die mindestens eine Beleuchtungseinheit 30, 32, 34, 36 auf das jeweils zu vermessende Fahrzeugrad 40, 42, 44, 46 gerichtet sind. Die Beleuchtungseinheiten 30, 32, 34, 36 projiezieren zur Achsvermessung strukturiertes und/oder unstrukturiertes Licht auf die Fahrzeugräder 40, 42, 44, 46 des Fahrzeuges 41. Die reflektierten Lichtstrahlen des strukturiertes und/oder unstrukturiertes Licht können durch die mindestens eine Kamera 20, 22, 24, 26 aufgenommen werden und dienen mit Hilfe von Auswerteroutinen zur Bestimmung von Spur- und Sturz der zu vermessenden Fahrzeugräder 40, 42, 44, 46.

Die Messwertaufnehmer 10, 12, 14, 16, 18 weisen jeweils mindestens einen Ausrichtungssensor 28 auf, durch den die Orientierung des jeweiligen Messwertaufnehmers 10, 12, 14, 16 im Bezug zum Erdschwerefeld bestimmt wird. Der mindestens eine Ausrichtungssensor 28 kann ein Beschleunigungssensor oder ein Neigungssensor sein.

Die Messwertaufnehmer 10, 12, 14, 16 können im Bezug zum Fahrzeug 41 und zur Fahrschiene 4,6 so positioniert sein, dass die mindestens eine Kamera 20, 22, 24, 26 gleichzeitig auf das Fahrzeugrad 40, 42, 44, 46 und die Fahrschiene 4, 6 blicken kann und die mindestens eine Beleuchtungseinheit 30, 32, 34, 36 gleichzeitig eine Fahrzeugrad 40, 42, 44, 46 und eine Fahrschiene 4, 6 beleuchten können.

Alternativ oder zusätzlich kann die mindestens eine Kamera 20, 22, 24, 26 und/oder die mindestens eine Beleuchtungseinheit 30, 32, 34, 36 beweglich im Messwertaufnehmer 10, 12, 14, 16 gelagert sein. Dadurch können die mindestens eine Kamera 20, 22, 24, 26 und/oder die mindestens eine Beleuchtungseinheit 30, 32, 34, 36 vor der Bestimmung der Orientierung und/oder Ebenheit der Fahrschiene 4, 6 so gedreht werden, dass sie in Richtung der Fahrschiene 4, 6 blicken. Nach der Bestimmung der Orientierung und/oder Ebenheit der Fahrschiene 4, 6 können sie so gedreht werden, dass sie in Richtung des Fahrzeugrades 40, 42, 44, 46 blicken.

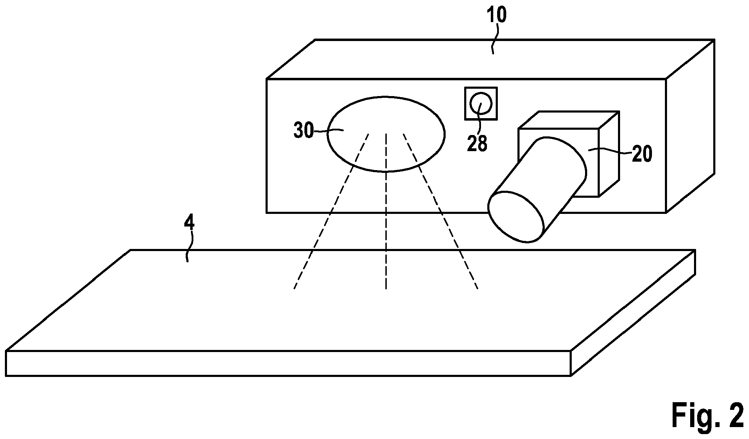

Ein erstens Ausführungsbeispiel wird anhand des vorderen rechten Messwertaufnehmers 10 und der rechten Fahrschiene 4 beschrieben, die in Figur 2 dargestellt sind. Die nachfolgenden Ausführungen lassen sich aber auch auf die weiteren Messwertaufnehmer 12, 14, 16 und die linke Fahrschiene 6 anwenden.

Figur 2 zeigt den vorderen rechten Messwertaufnehmer 10, der zur Vermessung des vorderen rechten Fahrzeugrades 40 dient. Die mindestens eine Beleuchtungseinheit 30, beleuchtet zumindest einen Abschnitt der Fahrschiene 4 mit strukturiertem Licht. Das reflektierte Licht wird durch die mindestens eine Kamera 20 des Messwertaufnehmers 10 aufgenommen und im Messwertaufnehmer 10 durch eine Auswerteeinheit mit Hilfe von Auswerteroutinen ausgewertet.

Durch die Beleuchtung mit strukturiertem Licht lässt sich beispielsweise ein Punktmuster oder eine Linienstruktur auf die Fahrschiene 4 projizieren. Das reflektierte Licht, in dem das strukturierte Lichtmuster erkennbar ist, wird durch die mindestens eine Kamera 20 aufgenommen.

Durch nachfolgende Auswerteroutinen werden in den Aufnahmen des strukturierten Lichtes mindestens drei Lichtpunkte identifiziert und zur Abstandsbestimmung zwischen Fahrschiene 4 und Messwertaufnehmer 10 ausgewertet. Die mindestens drei Lichtpunkte können beispielsweise durch Schnittpunkte einer Linienstruktur mit den Rändern der Fahrschiene gebildet werden. Alternativ kann bereits ein strukturiertes Punktemuster auf die Fahrschiene 4 projiziert werden, aus dem mindestens drei Lichtpunkte für die nachfolgenden Auswerteroutinen identifiziert werden. Ist das Muster des strukturierten Lichtes dem Messwertaufnehmer 20 bekannt, wird eine Kamera 20 benötigt. Bei einem unbekannten Muster des strukturierten Lichtes werden mindestens zwei Kameras 20 benötigt.

Die Abstandsbestimmung wird mit bekannten Auswertemethoden durchgeführt, die mit Methoden der Triangulation aus der mindestens einen Aufnahme der mindestens drei Lichtpunkte eine Abstandsberechnung durchführen. Aus der Abstandberechnung der mindestens drei Lichtpunkte lässt sich die Orientierung der Fahrschiene 4 im dreidimensionalen Raum im Bezug zum Messwertaufnehmer 10 berechnen.

Durch die Bestimmung der Orientierung des Messwertaufnehmers 10 zum Erdschwerefeld durch den Ausrichtungssensor 28 und der Kenntnis der Orientierung der Fahrschiene 4 zum Messwertaufnehmer 10 lässt sich die Orientierung der Fahrschiene 4 zum Erdschwerefeld bestimmen.

Die Messwertaufnehmer 10, 12, 14, 16 können eine Referenzsystem 18 aufweisen, durch welches die relative Lage der einzelnen Messwertaufnehmer 10, 12, 14, 16 zueinander bestimmt werden kann. Die Funktion eines derartigen Referenzsystems wird bspw. in der EP 1184 640 beschrieben.

Durch das Referenzsystem 18 kann die Orientierung der linken Fahrschiene 4 zur rechten Fahrschiene 6 bestimmt werden. Dazu wird die Orientierung der linken Fahrschiene 4 zum Messwertaufnehmer 10 bestimmt und die Orientierung der rechten Fahrschiene 6 zum Messwertaufnehmer 12 bestimmt. Des Weiteren wird durch das Referenzsystem 18 die Lage der beiden Messwertaufnehmer 10, 12 zueinander bestimmt, so dass daraus die Lage der linken Fahrschiene 4 zur rechten Fahrschiene 6 bestimmt werden kann. Ist in den beiden Messwertaufnehmern 10, 12 jeweils ein Ausrichtungssensor 18 enthalten, kann die Lage der linken Fahrschiene 4 und der rechten Fahrschiene 6 zueinander und zum Erdschwerefeld bestimmt werden.

Die Genauigkeit des Verfahrens kann erhöht werden, indem zur Bestimmung der Orientierung einer Fahrschiene 4, 6 mehr als ein Messwertaufnehmer 10, 12, 14, 16 eingesetzt werden. Die Orientierung der rechten Fahrschiene 4 kann jeweils durch den rechten vorderen Messwertaufnehmer 10 und den rechten hinteren Messwertaufnehmer 14 bestimmt werden. Durch das Referenzsystem 18 ist die Lage des rechten vorderen Messwertaufnehmers 10 zum rechten hinteren Messwertaufnehmer 14 bekannt. Die durch den rechten vorderen Messwertaufnehmer 10 bestimmte Orientierung der rechten Fahrschiene 4 und die durch den rechten hinteren Messwertaufnehmer 14 bestimmte Orientierung der rechten Fahrschiene 4 können gemittelt werden oder zum verifizieren der einzelnen Ergebnisse dienen.

Ein analoges Verfahren zur Bestimmung der Orientierung der linken Fahrschiene 6 ist mit den linken vorderen Messwertaufnehmer 12 und dem linken hinteren Messwertaufnehmer 16 möglich.

Das erfindungsgemäße Verfahren dient neben der Bestimmung der Orientierung der Fahrschienen 4, 6 auch zur Bestimmung der Ebenheit der Fahrschienen 4, 6. Hierzu wird analog zum bisher beschrieben Verfahren zur Bestimmung der Orientierung der Fahrschienen 4, 6 vorgegangen.

Anstelle von drei Lichtpunkten, die zur Bestimmung der Orientierung der Fahrschienen 4, 6 hinreichend sind, werden beim Verfahren zur Bestimmung der Ebenheit der Fahrschienen 4, 6 mindestens vier Lichtpunkte benötig. Die mindestens vier Lichtpunkte werden aus den Aufnahmen der mindestens einen Kameras 20 des durch die Fahrschienen reflektierten strukturierten Lichtes gewonnen.

Es erfolgt eine Abstandsbestimmung mit bekannten Auswertemethoden, die mit Methoden der Triangulation aus der mindestens einen Aufnahmen der mindestens vier Lichtpunkte eine Abstandsberechnung. Aus der Abstandberechnung der mindestens vier Lichtpunkte lässt sich die Ebenheit der Fahrschiene 4, 6 beurteilen. Befinden sich die mindestens vier Lichtpunkte auf einer Ebene, so ist eine Ebenheit der Fahrschiene 4 gegeben. Befinden sich die mindestens vier Lichtpunkte nicht auf einer Ebene, so ist keine Ebenheit der Fahrschiene 4,6 gegeben. Werden zur Bestimmung der Ebenheit mehr als vier Lichtpunkte ausgewertet, so kann die Genauigkeit des Verfahrens gesteigert werden.

In einem zweiten Ausführungsbeispiel befindet sich mindestens eine TOF-Kamera 20 (Time-of-the-flight-Kamera) in dem Messwertaufnehmer 10. Die Kamera 20 ist als TOF-Kamera 20 ausgebildet und kann mit einem Laufzeitverfahren Distanzen messen. Hierzu wird zumindest ein Abschnitt der Fahrschiene 4 mittels eines Lichtpulses ausgeleuchtet, und die TOF-Kamera 20 misst für jeden Bildpunkt die Zeit, die das Licht bis zur Fahrschiene 4 und wieder zurück benötigt. Die benötigte Zeit ist direkt proportional zur Distanz. Die TOF-Kamera 20 liefert somit für jeden Bildpunkt die Entfernung des darauf abgebildeten Objektes. Die TOF-Kamera 20 liefert eine Vielzahl von Bildpunkten mit bekannter Entfernung, so dass sich die Orientierung und/oder Ebenheit der Fahrschiene 4 daraus bestimmen lässt. Die Beleuchtungseinheit 30 ist in diesem Ausführungsbeispiel in der TOF-Kamera 20 integriert.

In einem dritten Ausführungsbeispiel wird die Fahrschiene 4 nicht mit strukturiertem Licht sondern mit unstrukturiertem Licht durch die Beleuchtungseinheit 30 beleuchtet. Durch die Beleuchtung mit unstrukturiertem Licht wird eine Eigentextur der Fahrschiene 4, 6 erkennbar. Das reflektierte Licht, in dem die Eigentextur der Fahrschiene 4, 6 erkennbar ist, wird durch mindestens zwei Kameras 20 aufgenommen. Die Eigentextur ist in diesem Ausführungsbeispiel den mindestens zwei Kameras 20 nicht bekannt.

Die einzelnen Merkmale der Eigentextur werden im Bezug auf ihren Abstand zum Messwertaufnehmer 10, 12, 14, 16 ausgewertet. Dies wird mit bekannten Auswertemethoden durchgeführt, die mit Methoden der Triangulation aus den Aufnahmen der mindestens zwei Kameras 20 eine Abstandsberechnung durchführen. Sind in der Eigentextur der Fahrschiene 4 mindestens drei markante Merkmale erkennbar, die nicht auf einer Gerade liegen, so lässt sich die Orientierung der Fahrschiene 4 im dreidimensionalen Raum im Bezug zum Messwertaufnehmer 10 berechnen. Analog lässt sich auch die Ebenheit der Fahrschiene 4 bestimmen, indem mindestens vier markante Merkmale aus der Eigentextur der Fahrschiene 4 gewonnen werden.

Das zweite und dritte Ausführungsbeispiel lässt sich auch auf die weiteren Messwertaufnehmer 12, 14, 16 und die zugehörigen Beleuchtungseinheiten 32, 34, 36 und Kameras 22, 24, 26 und eine beliebige Kombination der genannten Komponenten ausweiten.

Das erfindungsgemäße Verfahren zur Bestimmung der Orientierung und/oder Ebenheit kann ohne oder mit Fahrzeug 41 auf den Fahrschienen 4, 6 durchgeführt werden. Befindet sich ein Fahrzeug 41 auf den Fahrschienen 4,6 werden nur die Bereiche der Fahrschienen 4,6, zur Auswertung genutzt, die nicht durch ein Fahrzeugrad 40, 42, 44, 46 verdeckt werden.

## Patentansprüche

1. Verfahren zur Bestimmung der Orientierung mindestens einer Fahrschiene (4,6) eines Messplatzes (2) einer Fahrwerksvermessungseinrichtung oder einer Kraftfahrzeugprüfstraße, mit mindestens einem Messwertaufnehmer (10,12,14,16),
wobei der mindestens eine Messwertaufnehmer (10,12,14,16) mindestens eine Kamera (20,22,24,26) mindestens eine Beleuchtungseinheit (30,32,34,36) und mindestens einen Ausrichtungssensor (28) aufweist;
wobei der mindestens eine Ausrichtungssensor (28) dazu ausgebildet ist, die Orientierung des jeweiligen Messwertaufnehmers (10,12,14,16) in Bezug zum Erdschwerefeld zu bestimmen;
wobei die mindestens eine Beleuchtungseinheit (30,32,34,36) zumindest einen Abschnitt der Fahrschiene (4,6) mit strukturierten und/oder unstrukturierten Licht beleuchtet und die mindestens eine Kamera (20,22,24,26) von der Fahrschiene (4,6) reflektiertes Licht aufnimmt; und
wobei das von der Fahrschiene (4,6) reflektierte Licht durch eine Auswerteeinheit mit Hilfe von Auswerteroutinen, die Methoden der Triangulation umfassen, ausgewertet wird, um den Abstand zwischen der Fahrschiene (4,6) und Messwertaufnehmer (10,12,14,16), die Orientierung der Fahrschiene (4,6) zum Messwertaufnehmer (10,12,14,16) sowie die Orientierung der Fahrschiene (4,6) zum Erdschwerefeld zu bestimmen.

2. Verfahren nach Anspruch 1, **dadurch gekennzeichnet, dass** das strukturierte Licht auf die Fahrschiene (4,6) projiziert wird und mindestens eine Kamera (20,22,24,26) die reflektierten Lichtpunkte aufnehmen, durch welche sich die Lage der Fahrschiene (4,6) im Bezug zum Messwertaufnehmer (10,12,14,16) bestimmen lässt.

3. Verfahren nach Anspruch 1, **dadurch gekennzeichnet, dass** die mindestens eine Beleuchtungseinheit (30,32,34,36) in der mindestens einen Kamera (20,22,24,26) integriert ist und die mindestens eine Kamera (20,22,24,26) als TOF-Kamera (Time-of-the-Flight-Kamera) ausgebildet ist, durch welche sich die Lage der Fahrschiene (4,6) im Bezug zum Messwertaufnehmer (10,12,14,16) bestimmen lässt.

4. Verfahren nach Anspruch 1, **dadurch gekennzeichnet, dass** durch das unstrukturierte Licht eine Eigentextur der Fahrschiene (4,6) erkennbar ist, durch welche sich die Lage der Fahrschiene (4,6) im Bezug zum Messwertaufnehmer (10, 12, 14,16) bestimmen lässt.

5. Verfahren nach einem der vorherigen Ansprüche, **dadurch gekennzeichnet, dass** durch mindestens einen Messwertaufnehmer (10,14) eine linke Fahrschiene (4) vermessen wird und durch mindestens einen weiteren Messwertaufnehmer (12, 16) eine rechte Fahrschiene (6) vermessen wird, wobei die Messwertaufnehmer (10,12,14,16) ein Referenzsystem (18) aufweisen, durch welches die Orientierung der linken Fahrschiene (4) zur rechten Fahrschiene (6) bestimmt wird.

6. Verfahren nach Anspruch 1, **dadurch gekennzeichnet, dass** mindestens ein Ausrichtungssensor (28) im Messwertaufnehmer (10, 12, 14,16) die Orientierung des Messwertaufnehmers (10, 12, 14,16) und die Orientierung der Fahrschiene (4,6) zum Erdschwerefeld bestimmt.

7. Verfahren nach Anspruch 1, **dadurch gekennzeichnet, dass** die Messwertaufnehmer (10,12,14,16) so in Bezug zu einem Fahrzeug (41) positioniert sind, dass die mindestens eine Kamera (20,22,24,26) gleichzeitig auf ein Fahrzeugrad (40,42,44,46) und eine Fahrschiene (4,6) blickt und die mindestens eine Beleuchtungseinheit (30,32,34,36) gleichzeitig auf ein Fahrzeugrad (40,42,44,46) und eine Fahrschiene (4,6) gerichtet ist.

8. Verfahren nach Anspruch 1, **dadurch gekennzeichnet, dass** die mindestens eine Kamera (20,22,24,26) und/oder die mindestens eine Beleuchtungseinheit (30,32,34,36) vor der Beleuchtung und Aufnahme des reflektierten Lichts so gedreht werden, dass sie in Richtung der Fahrschiene (4,6) blicken.

9. Verfahren nach einem der vorherigen Ansprüche, **dadurch gekennzeichnet, dass** die mindestens eine Fahrschiene (4,6) bezüglich ihrer Ebenheit untersucht wird.

10. Verfahren nach einem der vorherigen Ansprüche, **dadurch gekennzeichnet, dass** sich ein Fahrzeug (41) auf den Fahrschienen (4,6) befindet.

11. Vorrichtung zur Bestimmung der Orientierung und/oder Ebenheit mindestens einer Fahrschiene (4,6) eines Messplatzes (2) einer Fahrwerksvermessungseinrichtung oder einer Kraftfahrzeugprüfstraße, mit mindestens einem Messwertaufnehmer (10,12,14,16);
wobei der mindestens eine Messwertaufnehmer (10,12,14,16) mindestens eine Kamera (20,22,24,26) mindestens eine Beleuchtungseinheit (30,32,34,36) und mindestens einen Ausrichtungssensor (28) aufweist,
wobei der mindestens eine Ausrichtungssensor (28) dazu ausgebildet ist, die Orientierung des jeweiligen Messwertaufnehmers (10,12,14,16) in Bezug zum Erdschwerefeld zu bestimmen;
wobei der mindestens eine Messwertaufnehmer (10,12,14,16) so im Bezug zum Fahrzeug (41) und zur Fahrschiene (4,6) positioniert ist, dass die mindestens eine Kamera (20,22,24,26) und die mindestens eine Beleuchtungseinheit (30,32,34,36) sowohl auf ein Fahrzeugrad (40,42,44,46) als auch auf eine Fahrschiene (4,6), auf der das Fahrzeugrad (40,42,44,46) angeordnet ist, gerichtet sind, so dass die mindestens eine Beleuchtungseinheit (30,32,34,36) zumindest einen Abschnitt der Fahrschiene (4,6) mit strukturierten und/oder unstrukturierten Licht beleuchtet und die mindestens eine Kamera (20,22,24,26) durch die Fahrschiene (4,6) reflektiertes Licht aufnimmt; und
wobei die Vorrichtung zusätzlich eine Auswerteeinheit umfasst, die ausgebildet ist, das von der Fahrschiene (4,6) reflektierte Licht mit Hilfe von Auswerteroutinen, die Methoden der Triangulation umfassen, auszuwerten, um den Abstand zwischen der Fahrschiene (4,6) und dem Messwertaufnehmer (10,12,14,16), die Orientierung der Fahrschiene (4,6) zum Messwertaufnehmer (10,12,14,16) sowie die Orientierung der Fahrschiene (4,6) zum Erdschwerefeld zu bestimmen.

12. Vorrichtung nach Anspruch 11, **dadurch gekennzeichnet, dass** die mindestens eine Kamera (20,22,24,26) und/oder die mindestens eine Beleuchtungseinheit (30,32,34,36) beweglich im Messwertaufnehmer (10,12,14,16) gelagert sind.

13. Vorrichtung nach einem der Ansprüche 11 oder 12, **dadurch gekennzeichnet, dass** mindestens eine Beleuchtungseinheit (30, 32, 34,36) in mindestens einer Kamera (20,22,24,26) integriert ist, wobei die Kamera (20, 22, 24,26) als TOF-Kamera (Time-of-the-flight-Kamera) ausgebildet ist.

## Claims

1. A method of determining the orientation of at least one running rail (4, 6) of a measuring station (2) of a wheel alignment measurement device or a motor vehicle test lane, comprising at least one measuring transducer (10, 12, 14, 16),
wherein the at least one measuring transducer (10, 12, 14, 16) comprises at least one camera (20, 22, 24, 26), at least one illumination unit (30, 32, 34, 36) and at least one orientation sensor (28);
wherein the at least one orientation sensor (28) is adapted to determine the orientation of the respective transducer (10, 12, 14, 16) in relation to the Earth's gravity field;
wherein the at least one illumination unit (30, 32, 34, 36) illuminates at least a section of the running rail (4, 6) with structured and/or unstructured light and the at least one camera (20, 22, 24, 26) records light reflected by the running rail (4, 6); and
wherein the light reflected by the running rail (4, 6) is evaluated by an evaluation unit with the aid of evaluation routines comprising triangulation methods in order to determine the distance between the running rail (4, 6) and the measuring transducer (10, 12, 14, 16), the orientation of the running rail (4, 6) in relation to the measuring transducer (10, 12, 14, 16) as well as the orientation of the running rail (10, 12, 14, 16) in relation to the Earth's gravity field.

2. The method according to claim 1,
**characterized in that** the structured light is projected onto the running rail (4, 6) and at least one camera (20, 22, 24, 26) records the reflected light points, by means of which the position of the running rail (4, 6) in relation to the measuring transducer (10, 12, 14, 16) can be determined.

3. The method according to claim 1,
**characterized in that** the at least one illumination unit (30, 32, 34, 36) is integrated in the at least one camera (20, 22, 24, 26) and the at least one camera (20, 22, 24, 26) is designed as a TOF camera (time-of-the-flight camera), by means of which the position of the running rail (4, 6) in relation to the measuring transducer (10, 12, 14, 16) can be determined.

4. The method according to claim 1,
**characterized in that** an inherent texture of the running rail (4, 6) can be seen by the unstructured light, through which the position of the running rail (4, 6) in relation to the measuring transducer (10, 12, 14, 16) can be determined.

5. The method according to any of the preceding claims,
**characterized in that** a left-hand running rail (4) is measured by at least one measuring transducer (10, 14) and a right-hand running rail (6) is measured by at least one further measuring transducer (12, 16), wherein the measuring transducers (10, 12, 14, 16) comprise a reference system (18) by means of which the orientation of the left-hand running rail (4) in relation to the right-hand running rail (6) is determined.

6. The method according to claim 1,
**characterized in that** at least one orientation sensor (28) in the measuring transducer (10, 12, 14, 16) determines the orientation of the measuring transducer (10, 12, 14, 16) and the orientation of the running rail (4, 6) in relation to the Earth's gravity field.

7. The method according to claim 1,
**characterized in that** the measuring transducers (10, 12, 14, 16) are positioned in relation to a vehicle (41) such that the at least one camera (20, 22, 24, 26) is directed simultaneously to a vehicle wheel (40, 42, 44, 46) and a running rail (4, 6) and the at least one illumination unit (30, 32, 34, 36) is directed simultaneously to a vehicle wheel (40, 42, 44, 46) and a running rail (4, 6).

8. The method according to claim 1,
**characterized in that** the at least one camera (20, 22, 24, 26) and/or the at least one illumination unit (30, 32, 34, 36), prior to illumination and recording of the reflected light, are rotated such that they are directed in the direction of the running rail (4, 6).

9. The method according to any of the preceding claims,
**characterized in that** the at least one running rail (4, 6) is examined with respect to its flatness.

10. The method according to any of the preceding claims,
**characterized in that** there is a vehicle (41) on the running rails (4, 6).

11. A device for determining the orientation and/or flatness of at least one running rail (4, 6) of a measuring station (2) of a wheel alignment measurement device or a motor vehicle test lane, comprising at least one measuring transducer (10, 12, 14, 16);
wherein the at least one measuring transducer (10, 12, 14, 16) comprises at least one camera (20, 22, 24, 26), at least one illumination unit (30, 32, 34, 36) and at least one orientation sensor (28),
wherein the at least one orientation sensor (28) is adapted to determine the orientation of the respective measuring transducer (10, 12, 14, 16) in relation to the Earth's gravity field;
wherein the at least one measuring transducer (10, 12, 14, 16) is positioned in relation to the vehicle (41) and the running rail (4, 6) such that the at least one camera (20, 22, 24, 26) and the at least one illumination unit (30, 32, 34, 36) are directed both to a vehicle wheel (40, 42, 44, 46) and to a running rail (4, 6) on which the vehicle wheel (40, 42, 44, 46) is arranged, such that the at least one illumination unit (30, 32, 34, 36) illuminates at least a section of the running rail (4, 6) with structured light and/or unstructured light and the at least one camera (20, 22, 24, 26) records light reflected by the running rail (4, 6); and
wherein the device comprises in addition an evaluation unit which is adapted to evaluate the light reflected by the running rail (4, 6) with the aid of evaluation routines comprising triangulation methods in order to determine the distance between the running rail (4, 6) and the measuring transducer (10, 12, 14, 16), the orientation of the running rail (4, 6) in relation to the measuring transducer (10, 12, 14, 16) as well as the orientation of the running rail (10, 12, 14, 16) in relation to the Earth's gravity field.

12. The device according to claim 11,
**characterized in that** the at least one camera (20, 22, 24, 26) and/or the at least one illumination unit (30, 32, 34, 36) are movably supported in the measuring transducer (10, 12, 14, 16).

13. The device of any of claims 11 or 12,
**characterized in that** at least one illumination unit (30, 32, 34, 36) is integrated in at least one camera (20, 22, 24, 26), wherein the camera (20, 22, 24, 26) is designed as a TOF camera (time-of-the-flight camera).

## Revendications

1. Procédé de détermination de l'orientation d'au moins un rail de roulement (4, 6) du poste de mesure (2) d'un dispositif de mesure de la géométrie d'un véhicule ou d'une chaîne de contrôle de véhicules automobiles, à l'aide d'au moins un transducteur (10, 12, 14, 16),
où le transducteur (10, 12, 14, 16), un au moins, comprend au moins une caméra (20, 22, 24, 26), au moins une unité d'éclairage (30, 32, 34, 36) et au moins un capteur d'orientation (28) ;
où le capteur d'orientation (28), un au moins, est configuré de manière à déterminer l'orientation du transducteur correspondant (10, 12, 14, 16) par rapport au champ gravitationnel ;
où l'unité d'éclairage (30, 32, 34, 36), une au moins, éclaire au moins une partie du rail de roulement (4, 6) avec une lumière structurée et/ou non structurée et où la caméra (20, 22, 24, 26), une au moins, reçoit la lumière réfléchie par le rail de roulement (4, 6) ; et
où la lumière réfléchie par le rail de roulement (4, 6) est évaluée par une unité d'évaluation à l'aide de routines d'évaluation qui englobent des méthodes de triangulation, et ce afin de déterminer la distance entre le rail de roulement (4, 6) et le transducteur (10, 12, 14, 16), l'orientation du rail de roulement (4, 6) par rapport au transducteur (10, 12, 14, 16), ainsi que l'orientation du rail de roulement (4, 6) par rapport au champ gravitationnel.

2. Procédé selon la revendication 1, **caractérisé en ce que** la lumière structurée est projetée sur le rail de roulement (4, 6) et qu'au moins une caméra (20, 22, 24, 26) reçoit les points lumineux réfléchis, qui permettent de déterminer la position du rail de roulement (4, 6) par rapport au transducteur (10, 12, 14, 16).

3. Procédé selon la revendication 1, **caractérisé en ce que** l'unité d'éclairage (30, 32, 34, 36), une au moins, est intégrée à la caméra (20, 22, 24, 26), une au moins, et que la caméra (20, 22, 24, 26), une au moins, est conçue en tant que caméra TOF (Time of Flight, ou temps de vol), qui permet de déterminer la position du rail de roulement (4, 6) par rapport au transducteur (10, 12, 14, 16).

4. Procédé selon la revendication 1, **caractérisé en ce que** la lumière non structurée permet de mettre en évidence une texture propre du rail de roulement (4, 6), qui permet de déterminer la position du rail de roulement (4, 6) par rapport au transducteur (10, 12, 14, 16).

5. Procédé selon l'une quelconque des revendications précédentes, **caractérisé en ce qu'**au moins un transducteur (10, 14) mesure un rail de roulement gauche (4) et au moins un autre transducteur (12, 16) mesure un rail de roulement droit (6), sachant que les transducteurs (10, 12, 14, 16) présentent un système de référence (18), qui permet de déterminer l'orientation du rail de roulement gauche (4) par rapport au rail de roulement droit (6).

6. Procédé selon la revendication 1, **caractérisé en ce qu'**au moins un capteur d'orientation (28) situé dans le transducteur (10, 12, 14, 16) détermine l'orientation du transducteur (10, 12, 14, 16) et l'orientation du rail de roulement (4, 6) par rapport au champ gravitationnel.

7. Procédé selon la revendication 1, **caractérisé en ce que** les transducteurs (10, 12, 14, 16) sont positionnés par rapport à un véhicule (41) de telle sorte que la caméra (20, 22, 24, 26), une au moins, saisit simultanément une roue du véhicule (40, 42, 44, 46) et un rail de roulement (4, 6) et que l'unité d'éclairage (30, 32, 34, 36), une au moins, est orientée simultanément sur une roue du véhicule (40, 42, 44, 46) et un rail de roulement (4, 6).

8. Procédé selon la revendication 1, **caractérisé en ce que** la caméra (20, 22, 24, 26), une au moins, et/ou l'unité d'éclairage (30, 32, 34, 36), une au moins, sont tournées de telle sorte qu'elles regardent en direction du rail de roulement (4, 6) avant l'éclairage et avant la réception de la lumière réfléchie.

9. Procédé selon l'une quelconque des revendications précédentes, **caractérisé en ce que** la planéité du rail de roulement (4, 6), un au moins, fait l'objet d'un examen.

10. Procédé selon l'une quelconque des revendications précédentes, **caractérisé en ce qu'**un véhicule (41) se trouve sur les rails de roulement (4, 6).

11. Dispositif de détermination de l'orientation et/ou de la planéité d'au moins un rail de roulement (4, 6) du poste de mesure (2) d'un dispositif de mesure de la géométrie d'un véhicule ou d'une chaîne de contrôle de véhicules automobiles, à l'aide d'au moins un transducteur (10, 12, 14, 16) ;
où le transducteur (10, 12, 14, 16), un au moins, comprend au moins une caméra (20, 22, 24, 26), au moins une unité d'éclairage (30, 32, 34, 36) et au moins un capteur d'orientation (28) ;
où le capteur d'orientation (28), un au moins, est configuré de manière à déterminer l'orientation du transducteur correspondant (10, 12, 14, 16) par rapport au champ gravitationnel ;
où le transducteur (10, 12, 14, 16), un au moins, est positionné par rapport au véhicule (41) et au rail de roulement (4, 6) de telle sorte que la caméra (20, 22, 24, 26), une au moins, et l'unité d'éclairage (30, 32, 34, 36), une au moins, sont orientées à la fois vers une roue du véhicule (40, 42, 44, 46) et un rail de roulement (4, 6) sur lequel est disposée la roue du véhicule (40, 42, 44, 46), de manière à ce que l'unité d'éclairage (30, 32, 34, 36), une au moins, éclaire au moins une partie du rail de roulement (4, 6) avec une lumière structurée et/ou non structurée et que la caméra (20, 22, 24, 26), une au moins, reçoive la lumière réfléchie par le rail de roulement (4, 6) ; et
où le dispositif comprend en outre une unité d'évaluation conçue pour évaluer la lumière réfléchie par le rail de roulement (4, 6) à l'aide de routines d'évaluation qui englobent des méthodes de triangulation, et ce afin de déterminer la distance entre le rail de roulement (4, 6) et le transducteur (10, 12, 14, 16), l'orientation du rail de roulement (4, 6) par rapport au transducteur (10, 12, 14, 16), ainsi que l'orientation du rail de roulement (4, 6) par rapport au champ gravitationnel.

12. Dispositif selon la revendication 11, **caractérisé en ce que** la caméra (20, 22, 24, 26), une au moins, et/ou l'unité d'éclairage (30, 32, 34, 36), une au moins, sont logées de manière mobile dans le transducteur (10, 12, 14, 16).

13. Dispositif selon l'une des revendications 11 ou 12, **caractérisé en ce qu'**au moins une unité d'éclairage (30, 32, 34, 36) est intégrée à au moins une caméra (20, 22, 24, 26), sachant que la caméra (20, 22, 24, 26) est conçue en tant que caméra TOF (Time of Flight, ou temps de vol).
